# EUROPEAN PATENT APPLICATION

(11) **EP 4 664 790 A1**
(43) Date of publication of application: **17.12.2025**
(21) Application number: 24181041.5
(22) Date of filing: 10.06.2024
(51) Int. Cl.: H04B 10/272, H04B 10/69

(54) **OPTICAL BURST MODE RECEIVER**

(71) Applicant: Nokia Solutions and Networks Oy, 02610 Espoo (FI)
(72) Inventor: BREYNE, Laurens, 8770 Ingelmunster (BE); VERPLAETSE, Michiel, 9810 Nazareth (BE); LEFEVRE, Yannick, 3001 Heverlee (BE)
(74) Representative: Sayer, Robert David

(57) **Abstract**

An optical burst mode receiver and methods of operation are disclosed. The optical burst mode receiver may comprise means for determining a first parameter associated with a first transimpedance amplifier, TIA, in response to the first TIA receiving a first burst mode signal, means for determining a configuration setting for at least a second, different, TIA based at least in part on the first parameter; and means for configuring at least the second TIA, for receiving a second burst mode signal, based at least in part on the configuration setting.

## Description

### Field

Examples embodiments relate to optical burst mode receivers and methods of operation thereof.

### Background

Optical networks, for example passive optical network (PONs), may comprise an optical line terminal (OLT) connected to a plurality of optical network units (ONU) via optical fibres and one or more optical splitters. At the OLT, burst mode signals transmitted by different ONUs are received by an optical burst mode receiver of the OLT. The optical burst mode receiver may comprise a plurality of transimpedance amplifiers (TIAs) for amplifying respective burst mode signals received from the plurality of ONUs to a predetermined swing, as well as removing possible distortions, such as, but not limited to, direct current (DC) offset.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an optical burst mode receiver, comprising: means for determining a first parameter associated with a first transimpedance amplifier, TIA, in response to the first TIA receiving a first burst mode signal; means for determining a configuration setting for at least a second, different, TIA based at least in part on the first parameter; and means for configuring at least the second TIA, for receiving a second burst mode signal, based at least in part on the configuration setting.

In some example embodiments, the first parameter may be indicative of at least one configuration setting of the first TIA in response to the first TIA receiving the first burst signal.

In some example embodiments, the first parameter may comprise, or may be indicative of, at least a gain value of the first TIA for amplifying the first burst mode signal to, or towards, a predetermined amplitude or swing.

In some example embodiments, the first parameter may comprise, or may be indicative of, at least an offset value for removing, or reducing, a DC component of the first burst mode signal.

In some example embodiments, the configuration setting may be determined based only on the first parameter.

In some example embodiments, the means for determining the first parameter may be configured to determine a plurality of parameters, including the first parameter, respectively associated with a plurality of TIAs, including the first TIA, in response to the plurality of TIAs receiving respective burst mode signals, and the configuration setting for at least the second TIA may be determined based at least in part on the plurality of parameters.

In some example embodiments, the configuration setting may be determined based on an average or weighted average of the plurality of parameters.

In some example embodiments, the configuration setting may be determined based on the highest value or lowest value of the plurality of parameters.

In some example embodiments, the configuration setting may be determined based on the value of the plurality of parameters that occurs most often.

In some example embodiments, the plurality of TIAs may include the second TIA.

In some example embodiments, the optical burst mode receiver may further comprise means for determining a second configuration setting for at least one of the plurality of TIAs, other than the second TIA, based at least in part on the plurality of parameters; and means for configuring said at least one TIA, other than the second TIA, based at least in part on the second configuration setting.

In some example embodiments, the second configuration setting may be determined based on modifying the configuration setting to compensate for a known static error associated with said at least one TIA.

In some example embodiments, the configuration setting may be determined responsive to receiving parameters from a majority of the plurality of TIAs.

In some example embodiments, the plurality of TIAs may be associated with different respective threshold levels, the plurality of parameters may at least indicate which of the different respective threshold levels are exceeded by the respective burst mode signals received by the plurality of TIAs, thereby to provide a reference input level, and the configuration setting may comprise an estimated gain value, determined based at least in part on the reference signal level, for amplifying at least some of the burst mode signals to, or towards, a predetermined level or swing.

In some example embodiments, the or each parameter may be a variable parameter until set by the respective TIAs or by a controller.

In some example embodiments, the means for determining the configuration setting may be enabled responsive to an external control signal.

In some example embodiments, the external control signal may be indicative of the start time of a next burst mode signal.

In some example embodiments, the optical burst mode receiver may further comprise: means for identifying an optical transmitter, e.g., optical network unit, ONU, from which at least the first burst mode signal is received; means for storing the configuration setting for at least the second TIA in association with the optical transmitter or ONU; and means for configuring at least the second TIA with the stored configuration setting in response to detecting that the second burst mode signal is from the optical transmitter or ONU.

In some example embodiments, the optical burst mode receiver may further comprise: means for determining a further configuration setting for an optical front-end device for providing the first and/or second burst mode signals to the first and second TIAs.

In some example embodiments, the optical burst mode receiver may be comprised by an optical line terminal, OLT, of a passive optical network, PON.

In some example embodiments, the first and second burst mode signals may be received from a same optical transmitter, for example a same optical network unit, ONU.

In some example embodiments, the first and second burst mode signals may at least partly overlap in time.

A second aspect provides a method comprising: determining a first parameter associated with a first transimpedance amplifier, TIA, in response to the first TIA receiving a first burst mode signal; determining a configuration setting for at least a second, different, TIA based at least in part on the first parameter; and configuring at least the second TIA, for receiving a second burst mode signal, based at least in part on the configuration setting.

In some example embodiments, the first parameter may be indicative of at least one configuration setting of the first TIA in response to the first TIA receiving the first burst signal.

In some example embodiments, the first parameter may comprise, or may be indicative of, at least a gain value of the first TIA for amplifying the first burst mode signal to, or towards, a predetermined amplitude or swing.

In some example embodiments, the first parameter may comprise, or may be indicative of, at least an offset value for removing, or reducing, a DC component of the first burst mode signal.

In some example embodiments, the configuration setting may be determined based only on the first parameter.

In some example embodiments, a plurality of parameters, including the first parameter, may be determined, the plurality of parameters respectively associated with a plurality of TIAs, including the first TIA, in response to the plurality of TIAs receiving respective burst mode signals, and the configuration setting for at least the second TIA may be determined based at least in part on the plurality of parameters.

In some example embodiments, the configuration setting may be determined based on an average or weighted average of the plurality of parameters.

In some example embodiments, the configuration setting may be determined based on the highest value or lowest value of the plurality of parameters.

In some example embodiments, the configuration setting may be determined based on the value of the plurality of parameters that occurs most often.

In some example embodiments, the plurality of TIAs may include the second TIA.

In some example embodiments, the method may further comprise determining a second configuration setting for at least one of the plurality of TIAs, other than the second TIA, based at least in part on the plurality of parameters; and configuring said at least one TIA, other than the second TIA, based at least in part on the second configuration setting.

In some example embodiments, the second configuration setting may be determined based on modifying the configuration setting to compensate for a known static error associated with said at least one TIA.

In some example embodiments, the configuration setting may be determined responsive to receiving parameters from a majority of the plurality of TIAs.

In some example embodiments, the plurality of TIAs may be associated with different respective threshold levels, the plurality of parameters may at least indicate which of the different respective threshold levels are exceeded by the respective burst mode signals received by the plurality of TIAs, thereby to provide a reference input level, and the configuration setting may comprise an estimated gain value, determined based at least in part on the reference signal level, for amplifying at least some of the burst mode signals to, or towards, a predetermined level or swing.

In some example embodiments, the or each parameter may be a variable parameter until set by the respective TIAs or by a controller.

In some example embodiments, the means for determining the configuration setting may be enabled responsive to an external control signal.

In some example embodiments, the external control signal may be indicative of the start time of a next burst mode signal.

In some example embodiments, the method may further comprise: identifying an optical transmitter, e.g., optical network unit, ONU, from which at least the first burst mode signal is received; storing the configuration setting for at least the second TIA in association with the optical transmitter or ONU; and configuring at least the second TIA with the stored configuration setting in response to detecting that the second burst mode signal is from the optical transmitter or ONU.

In some example embodiments, the method may further comprise: determining a further configuration setting for an optical front-end device for providing the first and/or second burst mode signals to the first and second TIAs.

In some example embodiments, the method may be performed by or at an optical line terminal, OLT, of a passive optical network, PON.

In some example embodiments, the first and second burst mode signals may be received from a same optical transmitter, for example a same optical network unit, ONU.

In some example embodiments, the first and second burst mode signals may at least partly overlap in time.

A third aspect of provides a computer program comprising a set of instructions which, when executed on an apparatus, is configured to cause the apparatus to carry out a method comprising: determining a first parameter associated with a first transimpedance amplifier, TIA, in response to the first TIA receiving a first burst mode signal; determining a configuration setting for at least a second, different, TIA based at least in part on the first parameter; and configuring at least the second TIA, for receiving a second burst mode signal, based at least in part on the configuration setting.

The third aspect may also comprise any feature described in relation to the second aspect.

A fourth aspect of the invention provides a non-transitory computer-readable medium having stored thereon computer-readable code, which, when executed by at least one processor, causes the at least one processor to perform a method, comprising: determining a first parameter associated with a first transimpedance amplifier, TIA, in response to the first TIA receiving a first burst mode signal; determining a configuration setting for at least a second, different, TIA based at least in part on the first parameter; and configuring at least the second TIA, for receiving a second burst mode signal, based at least in part on the configuration setting.

The fourth aspect may also comprise any feature described in relation to the second aspect.

A fifth aspect of the invention provides an apparatus, the apparatus having at least one processor and at least one memory having computer-readable code stored thereon which when executed controls the at least one processor to: determine a first parameter associated with a first transimpedance amplifier, TIA, in response to the first TIA receiving a first burst mode signal; determine a configuration setting for at least a second, different, TIA based at least in part on the first parameter; and configure at least the second TIA, for receiving a second burst mode signal, based at least in part on the configuration setting.

The fifth aspect may also comprise any feature described in relation to the second aspect.

### Brief Description of the Drawings

The invention will now be described, by way of non-limiting example, with reference to the accompanying drawings, in which:
FIG. 1 illustrates an example passive optical network (PON);
FIGs. 2(a)-(c) illustrate respective first to third burst mode receivers;
FIG. 3(a) illustrates an example optical transimpedance amplifier (TIA);
FIG. 3(b) illustrates a graph useful for understanding an operation of the FIG. 3(a) TIA;
FIG. 4 illustrates part of an optical burst mode receiver in accordance with some example embodiments;
FIG. 5 illustrates part of another optical burst mode receiver in accordance with some example embodiments;
FIG. 6 is a flow diagram indicating operations in accordance with some example embodiments;
FIG. 7 illustrates an apparatus which may be configured to operate in accordance with some example embodiments; and
FIG. 8 illustrates a non-transitory computer-readable medium for storing computer-readable instructions for causing the FIG. 7 apparatus to operate in accordance with some example embodiments.

### Detailed Description

Examples embodiments relate to optical burst mode receivers and methods of operation thereof.

Example embodiments relate to optical burst mode receivers for use in, by way of example, passive optical networks (PONs).

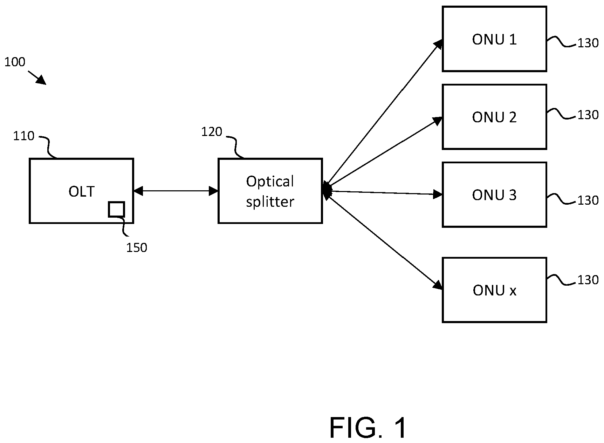

FIG. 1 illustrates an example PON 100. The PON 100 may comprise three distinct types of device, namely an optical line terminal (OLT) 110, a plurality of optical network units (ONUs) 130 and an optical splitter 120. Other terminology may sometimes be used for the same or equivalent devices.

Communications between the OLT 110 and the plurality of ONUs 130 takes place over optical fibres and through the optical splitter 120. The optical splitter 120 is configured to multiplex and/or demultiplex signals based on their origin and destination. For so-called fibre-to-the-home (FTTH) PON networks, the OLT 110 may be located at a service provider's central office and in that sense may be considered a network side device. The OLT 100 serves as the point of origination for downstream transmissions coming from, and upstream transmissions going to, the service provider's network. The OLT 100 performs conversion between electrical signals and optical signals. The optical splitter 120 is used to split downstream optical signals into several parts at a certain ratio. The ratio may be symmetric, e.g., a 1:2, 1:4 or 1:8 split with equal power on each of the two, four or eight branches. Asymmetric splitters may also be used. These optical signals are then sent to respective ONUs 130 which are typically associated with different users and in that sense may be considered user or subscriber end devices. The respective ONUs 130 terminate the optical signals transmitted via the fibre. The data conveyed over the PON may then be distributed throughout the home, for example using Wi-Fi and/or Ethernet transceivers which may comprise part of the ONUs 130 or which may be a separate device. Upstream optical signals from the ONUs 130 are handled by the optical splitter 120 in the reverse manner.

Advantages of PON technology include high bandwidth, long distance and low cost of passive elements and installation compared to copper-based or wireless technologies.

Most PON technologies are time-division multiplexing (TDM) technologies in which the fibre medium is shared in time between respective ONUs. Time and wavelength -division multiplexing (TWDM) technologies also exist. Future generation PON technologies are proposed which may use data rates of 100 Gb/s and beyond. To achieve such data rates, the industry is considering approaches to further increase throughput though one or more of: increasing the baud rate, use of parallel channels and/or use of higher spectral efficiencies. Some proposed approaches include, by way of example: intensity-modulation/direct detection (IM/DD) methods using wavelength multiplexing, e.g., using two wavelength channels simultaneously; IM/DD using polarization multiplexing, e.g., using two orthogonal polarizations of an optical signal; IM/DD using wavelength and polarization multiplexing, e.g., using two, 2 wavelength channels and two orthogonal polarizations for each wavelength signal; and coherent communication over one or two polarizations of an optical carrier.

At the OLT side, for example at the OLT 100 of FIG. 1, the OLT may comprise a burst mode receiver 150 for receiving respective burst mode signals (signals sent in short sequences or "bursts") from the different ONUs 130. Because the respective burst mode signals originate from different ONUs 130, their respective optical power and distortion(s) will likely differ from one another. Where the PON technology uses multiple parallel channels, a burst may comprise data on all parallel channels, e.g., two wavelengths and/or two polarizations.

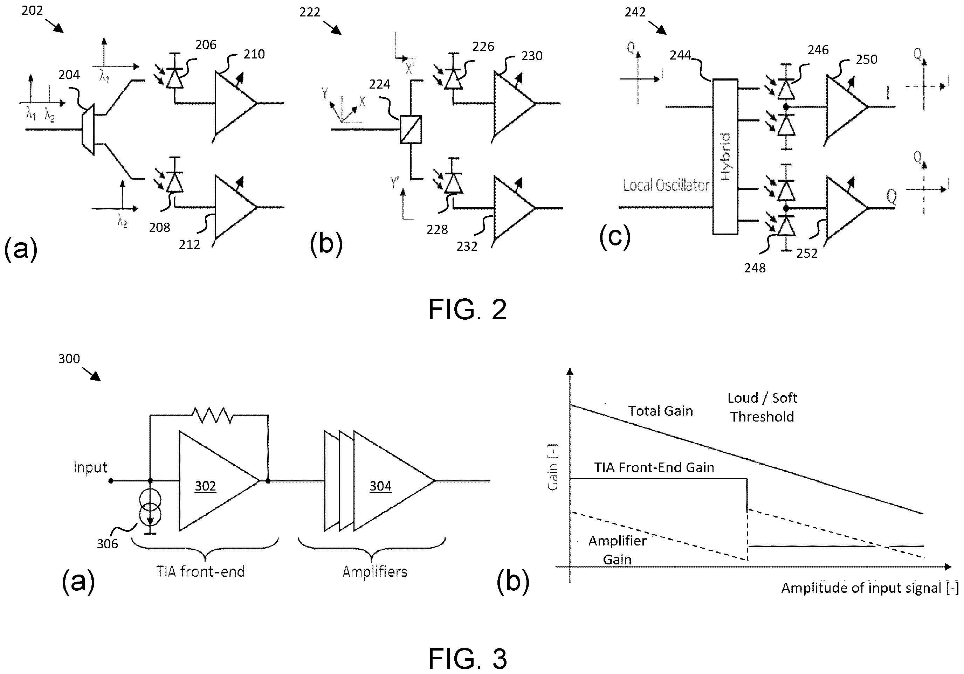

For example, FIG. 2(a) illustrates a burst mode receiver 202 for IM/DD technology which uses two wavelengths. The first burst mode receiver 202 comprises a wavelength-based optical splitter 204, first and second photodiodes 206, 208, and two burst mode transimpedance amplifiers (TIAs) 210, 212, one for each wavelength. The TIAs 210, 212 receive respective first and second burst mode signals and remove any DC offset present in said signals (balancing) and amplify said signals to a predetermined amplitude. Whilst a burst mode signal may comprise data on two wavelengths, the TIAs 210, 212 may perform the balancing and amplification separately from one another as, in principle, no coupling exists between the burst mode signals on the two wavelengths. However, the presence of, for instance, a joint optical amplifier may introduce a coupling between the first and second burst mode signals, as the gain experience on one wavelength may be impacted by the strength of the signal on the other wavelength.

For example, FIG. 2(b) illustrates a different burst mode receiver 222 for IM/DD technology which uses two polarizations of a single optical carrier. The second burst mode receiver 222 comprises a polarization-beam splitter (PBS) 224, first and second photodiodes 226, 228, and two burst mode TIAs 230, 232, one for each orthogonal (X and Y) polarization. Over the course of transmission to the second burst mode receiver 222, the orthogonal X and Y polarizations may experience a random rotation. Both outputs from the PBS 224 may comprise a projection of the received signal polarization on two arbitrary orthogonal axes and, as the polarization is random, each projection comprises part of the original X and Y polarization. In a digital signal processing (DSP) stage, a rotation is applied to separate the X and Y polarizations, an operation that relies on the orthogonality of the polarizations. The TIAs 210, 212 receive respective first and second burst mode signals, which may comprise a mixture of the two polarizations, and hence there is a coupling between the first and second burst mode signals.

FIG. 2(c) illustrates a further different burst mode receiver 242 for coherent technology which leverages both the amplitude and phase of the optical carrier to increase spectral efficiency. To decode the amplitude and phase, the received signal may be mixed with a local oscillator using an optical hybrid component 244. The resulting burst mode signals are real (in-phase) and imaginary (quadrature) components of the amplitude and phase of the optical carrier. A single-polarization coherent receiver requires a local oscillator, optical hybrid component 244, first and second balanced photodiodes 246, 248 (four photodiodes in total) and first and second TIAs 250, 252. A DSP maybe required to extract the correct phase and amplitude. In this case, there is also a coupling between the first and second burst mode signals.

The FIG. 2(a) - (c) burst mode receivers 202, 222, 242 are mentioned by way of example only, and other burst mode receiver architectures, possibly using more than two channels, may be relevant to example embodiments.

It follows that TIAs of burst mode receivers are important components. A TIA is a device which converts a current to a voltage. In a PON context, TIAs should ideally remove any DC offset present in its received burst mode signal (balancing) and amplify the received burst mode signal to a predetermined amplitude or swing. TIAs may need to configure and subsequently reconfigure themselves in terms of, for example, balancing and gain control, relatively quickly in response to receiving new burst mode signals, ideally as soon as possible to minimize overhead. This configuring and reconfiguring will take a finite time period which may be referred to as a settling time period.

FIG. 3(a) illustrates a simplified burst mode TIA 300 in one example, comprising a TIA front-end amplifier 302 and one or more other amplifiers 304. In this exemplary implementation, a current source 306 at the input is responsible for balancing (removing the DC offset) whilst the gain of the TIA front-end amplifier 302 and other amplifiers 304 may be adjusted to provide an output signal with the predetermined amplitude or swing. One way to implement a rough or coarse scaling of the output signal is to implement the TIA front-end amplifier 302 to have at least two gain modes, namely a high and a low gain mode. As illustrated in FIG. 3(b), if a burst mode signal with a low input amplitude is received, below a high/low gain threshold, the TIA front-end amplifier 302 selects the high gain mode and, conversely, if a burst mode signal with a high input amplitude is received, above the high/low gain threshold, the TIA front-end amplifier selects the low gain mode to avoid producing a distorted output signal. The other amplifiers 304 may have a continuous gain range, indicated by broken lines, to amplify the output signal of the TIA front-end amplifier 302 such that the amplitude of their output signal is close to, or at, the predetermined output amplitude.

Existing optical burst mode receivers for single-channel IM/DD technologies require only a single TIA which may receive optical signals at only one wavelength without polarization diversity and only the optical carrier intensity is modulated. In the case where there are multiple channels, examples of which are mentioned above, multiple TIAs are required to operate independently and hence settle at particular offset and gain (thus output amplitude) values, among other parameters. Because of variations between different TIAs and/or non-idealities in the optical front-end or asymmetry in the burst mode input signals, different TIAs will likely settle at different balancing and gain values. This is particularly an issue for cases where the burst mode signals are not completely independent, for example where multiple polarization or coherent technologies are used. For example, where multiple polarizations are used, asymmetry between two or more TIAs may affect the orthogonality of the received signals, potentially leading to imperfect separation of the polarizations which can decrease link performance. When a single polarization coherent receiver is used, asymmetries may cause offset and/or horizontal/vertical scaling issues which may impact link performance. Further, the different TIAs may settle to different balancing and gain values for different bursts received from the same ONU. Further, if a received burst mode signal is close to the high/low gain threshold, one TIA may determine to switch to the high gain mode whereas another TIA may determine to switch to the low gain mode. As bandwidth and noise may be different in the high and low gain modes, one signal path may experience different noise characteristics and/or a different transfer function.

Example embodiments relate to optical burst mode receivers which may avoid or alleviate such issues associated, particularly with regard to multichannel technologies.

An example embodiment may comprise an optical burst mode receiver which comprises means for determining a first parameter associated with a first TIA, in response to the first TIA receiving a first burst mode signal, means for determining a configuration setting for at least a second, different, TIA based at least in part on the first parameter, and means for configuring at least the second TIA, for receiving a second burst mode signal, based at least in part on the configuration setting.

In this manner, the first parameter associated with the first TIA may be used to determine a configuration setting for at least the second TIA thereby to coordinate configuration of said at least the second TIA, thereby avoiding or alleviating penalties that may be introduced by the separate settling of the first and second TIAs, for example in terms of determining DC offset and/or gain values. As will be described below, the concept can be extended to more than two TIAs whereby parameters associated with two or more TIAs may be used to configure at least one other TIA and, in some cases, a plurality of other TIAs.

In some example embodiments, the TIAs may comprise part of the optical burst mode receiver.

In some example embodiments, the above-mentioned means may comprise at least part of a controller which comprises part of the optical burst mode receiver.

For example, the above-mentioned means may comprise one or more processors or controllers in combination with computer-readable instructions provided on one or more memories.

In some example embodiments, the first and second burst mode signals may be received from a same optical transmitter or ONU. In some example embodiments, the second burst mode signal may be received after the first burst mode signal. In some example embodiments, the first and second burst mode signals may at least partly overlap in time.

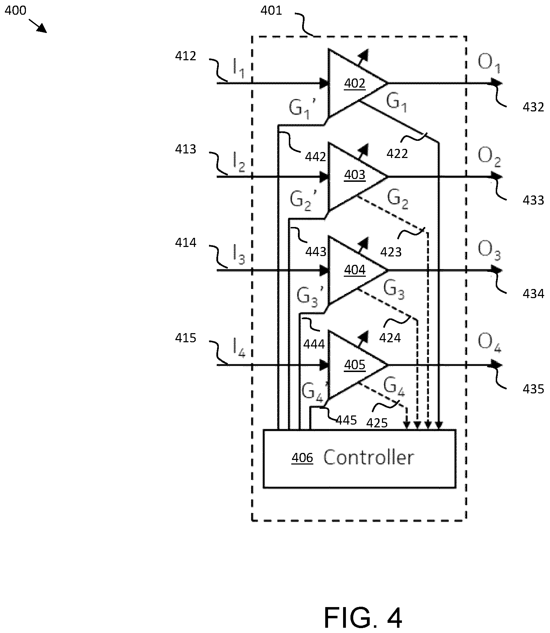

FIG. 4 illustrates a schematic view of part 401 of an optical burst mode receiver 400 according to some example embodiments.

The optical burst mode receiver 400 may comprise first to fourth TIAs 402 - 405; in other examples, there may be two, three or more than four TIAs.

The first to fourth TIAs 402 - 405 may receive respective first to fourth burst mode signals, *I1 - 14,* at their respective inputs 412 - 415, which burst mode signals may be received from an optical front-end (not shown) which may comprise at least one of an optical splitter, PBS or optical hybrid component and associated photodiodes as described above in relation to FIGs. 2(a) - 2(c).

The optical burst mode receiver 406 may also comprise a controller 406. The controller 406 may be implemented in hardware, software or a combination thereof.

At least one of the first to fourth TIAs 402 - 405, for example the first TIA 402, may, in response to receiving a respective first burst mode signal, *I1,* on its input 412, determine at least one configuration setting that it should use, for example which configuration current to use to remove DC offset (balancing offset) on the first burst mode signal, I1, and/or a gain, *G1*, to use to amplify the first burst mode signal, I1, to a predetermined output amplitude or swing; a balanced and amplified signal, *O1*, will be output via output line 432.

This so-called settling process may take a finite time period, namely a settling time period, during or after which the first TIA 402 may transmit to the controller 406, via a parameter line 422, at least one parameter.

The at least one parameter may indicate any configuration-related parameter of the first TIA 402 associated with the settling process.

For example, the at least one parameter may comprise an indication of at least one configuration setting of the first TIA 402 in response to the first TIA receiving the first burst mode signal, *I1.*

For example, the at least one parameter may comprise an indication of a balancing offset value. The indication may comprise the balancing offset value itself (as determined by the first TIA 402) or another value from which the balancing offset value can be determined by the controller 406, for example the DC offset measured at the first burst mode signal, *I1.*

Additionally, or alternatively, the at least one parameter may comprise an indication of the gain value, *G1,* for amplifying the first burst mode signal, *I1,* to, or towards, the predetermined amplitude or swing. The indication may comprise the gain value, *G1,* itself (as determined by the first TIA 402) or another value from which the gain value, *G1,* can be determined by the controller 406, for example the amplitude of the first burst mode signal, *I1.*

In the case that the first TIA 402 determines indications of balancing offset value and the gain value, *G1,* or other values, the above-described parameter may be considered to comprise two or more respective sub-parameters.

The controller 406 may determine the configuration setting of at least the first TIA 402 (either by receiving it or computing it); the controller 406 may then configure at least one other TIA, for example at least one of the second to fourth TIAs 403 - 405, based at least in part on the determined configuration setting.

In some example embodiments, the controller 406 may also configure the first TIA 402, based at least in part on the determined configuration setting. For example, the controller 406 may also take parameter(s) received from at least one of the second to fourth TIAs 403 - 405 into account.

The controller 406 may, for example, feedback configuration settings to at least some of the first to fourth TIAs 402 - 405 via respective feedback lines 442 - 444.

It will be appreciated that the concept can be extended to different parameters received by the controller 406 from multiple ones of the first to fourth TIAs 402 - 405 via respective parameter lines 422 - 424.

For example, the controller 406 may determine a plurality of parameters, including the first parameter, respectively associated with the first to fourth TIAs 402 - 405 in response to the first to fourth TIAs receiving respective first to fourth burst mode signals *I1* - *I4.*

The controller 406 may determine a configuration setting for at least some of the first to fourth TIAs 402 - 405 based at least in part on the plurality of parameters.

In an example, one of the first to fourth TIAs 402 - 405 may comprise a primary or master TIA and the configuration setting may be based at least in part on the parameter or multiple sub-parameters associated with the primary TIA.

For example, where the first TIA 402 comprises the primary TIA, the parameter or sub-parameters associated with the first TIA 402, for example balancing offset and gain values, may be used by the controller 406 to configure the second to fourth TIAs 403 - 405 via feedback lines 443 - 445.

For example, the controller 406 may determine the configuration setting to comprise a value of configuration current required to remove the DC offset from the first burst mode signal *I1* and a second value of gain required to amplify the first burst mode signal to a predetermined amplitude or swing.

The controller 406 may determine to configure the second to fourth TIAs 403 - 405 with the same configuration current and gain values which it feeds back via feedback lines 443 - 445.

In another example, the controller 406 may determine the configuration setting based on an average of the plurality of parameters, e.g., one or both of an average or weighted average of the indicated balancing offsets and/or an average or weighted average of the indicated gains, *G1* - *G4,* associated with the first to fourth TIAs 402 - 405, or based on the value of the plurality of parameters that occurs most often

In another example, the controller 406 may determine the configuration setting based on the highest (maximum) value or lowest (minimum) value among the plurality of parameters associated with the first to fourth TIAs 402 - 405.

In another example, the controller 406 may determine the configuration setting based on which value occurs most often among the plurality of parameters associated with the first to fourth TIAs 402 - 405.

In some example embodiments, different configuration settings may be determined for different ones of the first to fourth TIAs 402 - 405. In this sense, the controller 406 may process parameters associated with the first to fourth TIAs 402 - 405 separately rather than in a combined way.

For example, a first configuration setting may be associated with the second TIA 403 and a different, second configuration setting, may be associated with the third TIA 404. This concept can be extended further such that a different, third configuration setting, may be associated with the fourth TIA 405 and so on. For example, a preceding calibration stage may be used to determine one or more static errors associated with one or more of the first to fourth TIAs 402 - 405, optical front-end(s) and/or interfaces. Such static errors may, for example, be due to mismatches between different ones of the first to fourth TIAs 402 - 405, mismatches between different photodiodes associated with the first to fourth TIAs, and/or polarization-dependent losses in a coherent optical burst mode receiver. Depending on the origin of the static error, the controller 406 may take such static errors into account when configuring at least some of the first to fourth TIAs 402 - 405 to compensate for such static errors which may also avoid having to perform subsequent calibration in, for example, a DSP. This may improve the overall symmetry of the burst mode receiver 400.

In some example embodiments, the first to fourth TIAs 402 - 405 may determine their own respective configuration settings over a respective settling time periods prior to transmitting them to the controller 406; the controller 406 may, upon receipt of all of the respective configuration settings, determine which configuration setting or settings to feedback to the first to fourth TIAs 402 - 405. A possible settling time for the first to fourth TIAs 402 - 405 may be approximately 100 ns but will vary between the TIAs. The controller 406 may be configured to decrease the collective settling time in various ways.

For example, upon receipt by the controller 406 of said respective parameters from a majority of the first to fourth TIAs, the controller may responsively determine which configuration setting or settings to feedback to the first to fourth TIAs 402 - 405 without waiting for the remainder. Any of the above examples may be used.

In some example embodiments, the first to fourth TIAs 402 - 405 may transmit their respective parameters, which may be variable parameters e.g., analogue signals that vary over time, to the controller 406 prior to determining their own respective configuration settings, i.e., prior to settling. In this case, the controller 406 may form part of a feedback loop for the first to fourth TIAs 402 - 405 and may assist the first to fourth TIAs in settling to the determined configuration setting or settings. The controller 406 will in this case comprise more (averaged) data for a same time frame compared to individual ones of the first to fourth TIAs 402 - 405, and this can lead to faster settling times for the first to fourth TIAs collectively. As noted above, the respective parameters received by the controller 406 need not comprise, for example configuration settings such as balancing offset and/or gain values, but may comprise indications, for example, measured DC offset and/or input signal amplitude. The controller 406 will in this case know which offset is required to remove the DC offset and/or (based on knowledge of the predetermined output amplitude or swing) which gain is required to amplify the input signal to or towards the predetermined output amplitude or swing.

In some example embodiments, the first to fourth TIAs 402 - 405 may be associated with different respective threshold levels, for example amplitudes. For example, the controller 406 may instruct, via the feedback lines 442 - 445, that the first TIA 402 is associated with a first threshold level, the second TIA 403 is associated with a second, higher level, and so on.

The respective threshold levels may comprise the high/low gain thresholds described above with reference to FIG. 3.

The respective parameters associated with the first to fourth TIAs 402 - 405 may indicate if the respective threshold levels are exceeded by the respective first to fourth burst mode signals, *I1* - *I4,* thereby to indicate a reference input level.

In some cases, it can be assumed that each of the first to fourth burst mode signals, *I1* - 14, have similar levels; by use of the respective threshold levels, a form of basic analogue-to-digital conversion (ADC) is provided for rapidly determining an input signal level (reference input level) on which the configuration setting for at least some TIAs (possibly taking into account static errors) is to be based.

For example, the configuration setting may comprise an estimated gain value, determined based at least in part on the reference signal amplitude, for amplifying the respective first to fourth burst mode signals, *I1* - *I4,* to, or towards, the predetermined amplitude or swing.

In some example embodiments, the first to fourth TIAs 402 - 405 may be triggered to determine their respective configuration settings in response to receiving an external control signal which may indicate when the next burst mode signal is expected to start; the external control signal may cause the first to fourth TIAs 402 - 405 to reset their current configuration settings and then initiate next measurements. The controller 406 may in this case also receive the external control signal and may determine the configuration setting, or further configuration setting, for configuring at least some of the first to fourth TIAs 402 - 405 responsive to receiving the external control signal. That is, the controller 406 may be enabled to perform said determination responsive to receiving the external control signal. In general, the external control signalD may provide information on the expected timing of the burst. For example, the external control signal may provide information indicating the start time of the next burst mode signal.

In some example embodiments, the controller 406 may be configured to identify a particular ONU from which at least the first burst mode signal, *I1,* was received; the particular ONU may be identified by any suitable identifier. The determined configuration setting or settings associated with said first burst mode signal, *I1,* may be stored in association with the identified ONU. In response to detecting receipt of the second burst-mode signal, from the same identified ONU, the controller 406 may configure at least the second TIA 403 using the stored configuration setting or settings. This may also speed up the collective settling time.

In some example embodiments, the controller 406 may also be configured to determine a further configuration setting for one or more components of the burst-mode receiver 400 other than the first to fourth TIAs 402 - 405.

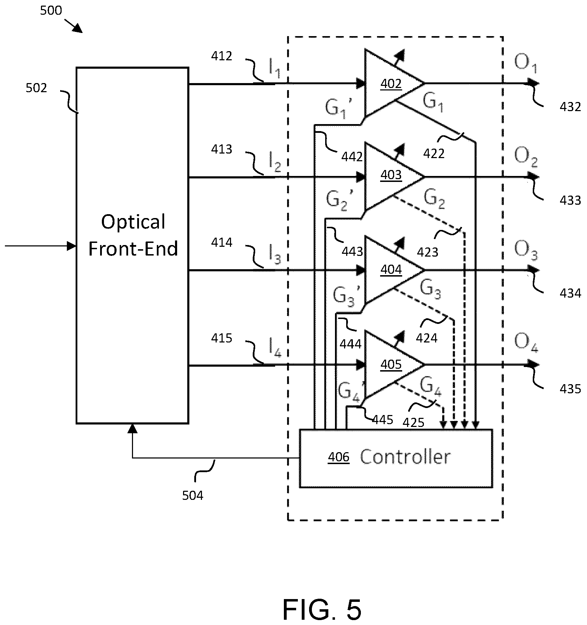

For example, FIG. 5 illustrates a schematic view of an optical burst mode receiver 500 according to some example embodiments.

The optical burst mode receiver 500 further comprises an optical front-end 502 (which may also comprise part of the FIG. 4 burst mode receiver) wherein the controller 406 is configured to provide a feedback signal to the optical front-end via a feedback line 504. The feedback signal may comprise a further configuration setting for an optical amplifier of the optical front-end 502, which is a form of pre-amplifier, wherein the further configuration setting may adjust a gain of the optical amplifier of the optical front-end for improving the dynamic range of the optical burst mode receiver 500. For coherent technologies, for example, power of a local oscillator within the optical front-end 502 may be adjusted to provide more or less coherent mixing gain for improving dynamic range.

In another example embodiment, an external signal such as for example a rate-select (RS) signal may be received by the controller 406 to assist in determining the configuration setting for the first to fourth TIAs 402 - 405. In single channel implementations, the RS signal is provided to a TIA to inform it about properties of the next burst mode signal to be received, and the TIA may use this information to optimize its gain, balancing, swing or other settings. In the multi-channel examples described herein, the RS signal may be received by the controller 406 and the configuration setting may be determined at least in part on the information provided with the RS signal.

In some example embodiments, the burst mode receiver 400, 500 may be comprised by an OLT of a PON, for example the OLT 110 of FIG. 1.

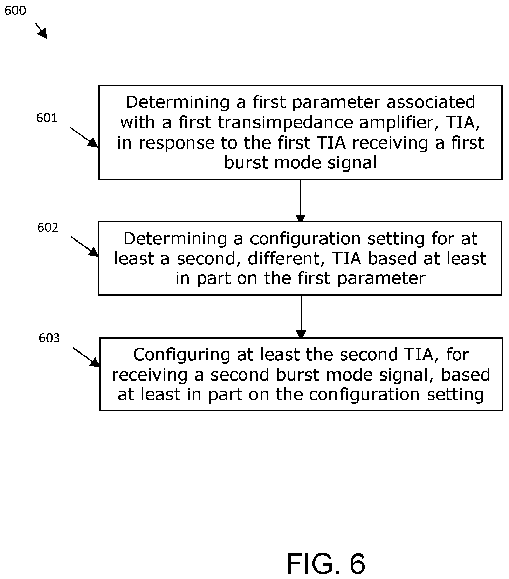

FIG. 6 is a flow diagram showing operations 600 that may be performed by one or more example embodiments. The operations 600 may be performed by hardware, software, firmware or a combination thereof. The operations 600 may be performed by one, or respective, means, a means being any suitable means such as one or more processors or controllers in combination with computer-readable instructions provided on one or more memories. The operations 600 may, for example, be performed by the controller 406 which may comprise part of an optical burst mode receiver.

A first operation 601 may comprise determining a first parameter associated with a first transimpedance amplifier, TIA, in response to the first TIA receiving a first burst mode signal.

A second operation 602 may comprise determining a configuration setting for at least a second, different, TIA based at least in part on the first parameter.

A third operation 603 may comprise configuring at least the second TIA, for receiving a second burst mode signal, based at least in part on the configuration setting.

Example embodiments enable coordinated configuration among a plurality of TIAs within an optical burst mode receiver which may be particularly useful where the optical burst mode receiver receives burst mode signals that are transmitted using a multi-channel technology; examples include, but are not limited to, at least one of IM/DD, IM/DD using polarization multiplexing, IM/DD using wavelength and polarization multiplexing, or coherent communications. Coordination may enable more optimal configuration settings for the plurality of TIAs and faster settlings times may also result, depending on the implementation. Coordination may also avoid the need for, or reduce the complexity of, a subsequent DSP which may conventionally be used to reduce or remove variations in, for example, output signal amplitudes. In this context, DSPs tend to have a longer settling times than individual TIAs, the latter of which having more fine-grained control of at least gain. Coordination of configuration settings may refer to at least one of balancing offset, gain control or other parameters linked to the operation and settling of TIAs. This may lead to improved control over the different TIAs which leads to more accurate and faster settling.

The above means and/or operations 600 may be performed at an OLT of a PON.

The optical burst mode receiver in accordance with example embodiments may be used with existing and future PON technologies including, but not limited to G.VSHP, 100G PON or 200G PON, and beyond.

### Example Apparatus

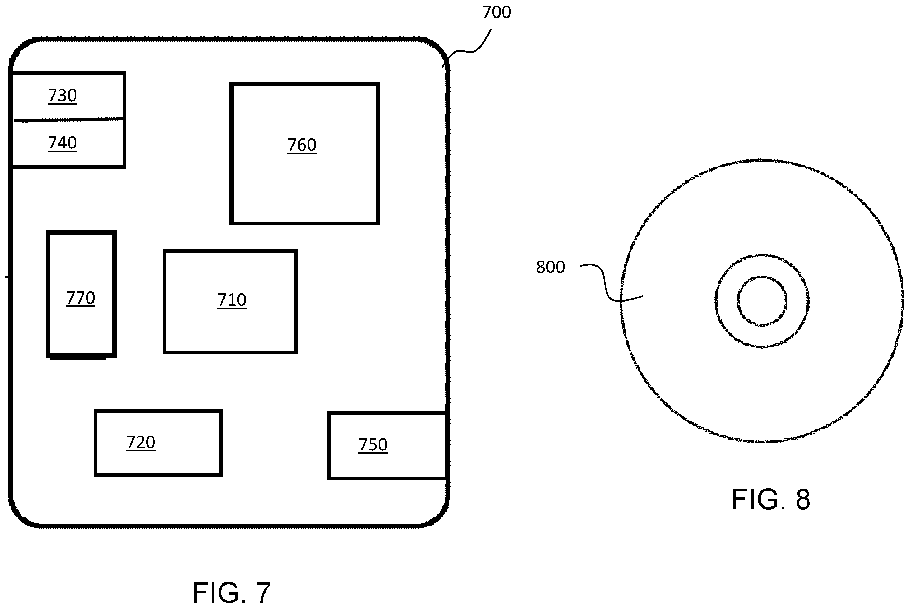

FIG. 7 illustrates an example apparatus 700 capable of supporting at least some embodiments. Illustrated is a device 700, which may the controller 406 of FIGs. 4 and 5, or other device. Comprised in device 700 is a processor 710, which may comprise, for example, a single- or multi-core processor wherein a single-core processor comprises one processing core and a multi-core processor comprises more than one processing core. The processor 710 may comprise, in general, a control device. The processor 710 may comprise more than one processor. The processor 710 may be a control device. The processor 710 may comprise at least one Application-Specific Integrated Circuit, ASIC. The processor 710 may comprise at least one Field-Programmable Gate Array, FPGA. The processor 710 may be means for performing method steps in device 700. The processor 710 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 700 may comprise a memory 720. The memory 720 may comprise random access memory and/or permanent memory. The memory 720 may comprise at least one RAM chip. The memory 720 may comprise solid-state, magnetic, optical and/or holographic memory, for example. The memory 720 may be at least in part accessible to processor 710. The memory 720 may be at least in part comprised in processor 710. The memory 720 may be means for storing information. The memory 720 may comprise computer instructions that processor 710 is configured to execute. When computer instructions configured to cause the processor 710 to perform certain actions are stored in the memory 720, and the device 700 overall is configured to run under the direction of the processor 710 using computer instructions from the memory 720, the processor 710 and/or its at least one processing core may be considered to be configured to perform said certain actions. The memory 720 may be at least in part comprised in the processor 710. The memory 720 may be at least in part external to the device 700 but accessible to the device 700.

The device 700 may comprise a transmitter 730. The device 700 may comprise a receiver 740. The transmitter 730 and the receiver 740 may be configured to transmit and receive, respectively, information in accordance with at least one standard.

The transmitter 730 may comprise more than one transmitter. The receiver 740 may comprise more than one receiver. The transmitter 730 and/or the receiver 740 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 700 may comprise a Near-Field Communication, NFC, transceiver 750. The NFC transceiver 750 may support at least one NFC technology, such as NFC, Bluetooth, Wibree or similar technologies.

The device 700 may comprise a User Interface, UI, 760. The UI 760 may comprise at least one of a display, a keyboard, a touchscreen, a vibrator arranged to signal to a user by causing device 700 to vibrate, a speaker and a microphone. A user may be able to operate the device 700 via the UI 760, for example to accept incoming telephone calls, to originate telephone calls or video calls, to browse the Internet, to manage digital files stored in memory 720 or on a cloud accessible via the transmitter 730 and the receiver 740, or via NFC transceiver 750, and/or to play games.

The device 700 may comprise or be arranged to accept a user identity module 770. The user identity module 770 may comprise, for example, a Subscriber Identity Module, SIM, card installable in device 700. The user identity module 770 may comprise information identifying a subscription of a user of device 700. The user identity module 770 may comprise cryptographic information usable to verify the identity of a user of device 700 and/or to facilitate encryption of communicated information and billing of the user of the device 700 for communication effected via device 700.

The processor 710 may be furnished with a transmitter arranged to output information from processor 710, via electrical leads internal to the device 700, to other devices comprised in the device 700. Such a transmitter may comprise a serial bus transmitter arranged to, for example, output information via at least one electrical lead to the memory 720 for storage therein. Alternatively to a serial bus, the transmitter may comprise a parallel bus transmitter.

Likewise, the processor 710 may comprise a receiver arranged to receive information in The processor 710, via electrical leads internal to the device 700, from other devices comprised in the device 700. Such a receiver may comprise a serial bus receiver arranged to, for example, receive information via at least one electrical lead from the receiver 740 for processing in the processor 710. Alternatively to a serial bus, the receiver may comprise a parallel bus receiver.

The device 700 may comprise further devices not illustrated in Figure 7.

The processor 710, memory 720, transmitter 730, receiver 740, NFC transceiver 750, UI 760 and/or user identity module 770 may be interconnected by electrical leads internal to the device 700 in a multitude of different ways. For example, each of the aforementioned devices may be separately connected to a master bus internal to the device 700, to allow for the devices to exchange information. However, as the skilled person will appreciate, this is only one example and depending on the embodiment various ways of interconnecting at least two of the aforementioned devices may be selected without departing from the scope of the present invention.

Figure 8 shows a non-transitory media 800 according to some embodiments. The non-transitory media 800 is a computer readable storage medium. It may be e.g. a CD, a DVD, a USB stick, a blue ray disk, etc. The non-transitory media 800 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

1. An optical burst mode receiver, comprising:
means for determining a first parameter associated with a first transimpedance amplifier, TIA, in response to the first TIA receiving a first burst mode signal;
means for determining a configuration setting for at least a second, different, TIA based at least in part on the first parameter; and
means for configuring at least the second TIA, for receiving a second burst mode signal, based at least in part on the configuration setting.

2. The optical burst mode receiver of claim 1,
wherein the first parameter is indicative of at least one configuration setting of the first TIA in response to the first TIA receiving the first burst signal.

3. The optical burst mode receiver of claim 2,
wherein the first parameter comprises, or is indicative of, at least one of:
a gain value of the first TIA for amplifying the first burst mode signal to, or towards, a predetermined amplitude or swing; or
an offset value for removing, or reducing, a DC component of the first burst mode signal.

4. The optical burst mode receiver of any preceding claim, wherein
the configuration setting is determined based only on the first parameter.

5. The optical burst mode receiver of any of claims 1 to 3, wherein
the means for determining the first parameter is configured to determine a plurality of parameters, including the first parameter, respectively associated with a plurality of TIAs, including the first TIA, in response to the plurality of TIAs receiving respective burst mode signals, and
the configuration setting for at least the second TIA is determined based at least in part on the plurality of parameters.

6. The optical burst mode receiver of claim 5,
wherein the configuration setting is determined based on one of:
an average or weighted average of the plurality of parameters;
the highest value or lowest value of the plurality of parameters; or
the value of the plurality of parameters that occurs most often.

7. The optical burst mode receiver of claim 5 or claim 6,
wherein the plurality of TIAs includes the second TIA.

8. The optical burst mode receiver of claims 5 to 7, further comprising:
means for determining a second configuration setting for at least one of the plurality of TIAs, other than the second TIA, based at least in part on the plurality of parameters; and
means for configuring said at least one TIA, other than the second TIA, based at least in part on the second configuration setting.

9. The optical burst mode receiver of claim 8,
wherein the second configuration setting is determined based on modifying the configuration setting to compensate for a known static error associated with said at least one TIA.

10. The optical burst mode receiver of any preceding claim,
wherein the means for determining the configuration setting is enabled responsive to an external control signal.

11. The optical burst mode receiver of any preceding claim, further comprising:
means for identifying an optical transmitter from which at least the first burst mode signal is received;
means for storing the configuration setting for at least the second TIA in association with the optical transmitter; and
means for configuring at least the second TIA with the stored configuration setting in response to detecting that the second burst mode signal is from the optical transmitter.

12. The optical burst mode receiver of any preceding claim, further comprising:
means for determining a further configuration setting for an optical front-end device for providing the first and/or second burst mode signals to the first and second TIAs.

13. The optical burst mode receiver of any preceding claim, wherein the optical burst mode receiver is comprised by an optical line terminal, OLT, of a passive optical network, PON.

14. The optical burst mode receiver of any preceding claim,
wherein the first and second burst mode signals are received from a same optical transmitter and/or at least partly overlap in time.

15. A method, comprising:
determining a first parameter associated with a first transimpedance amplifier, TIA, in response to the first TIA receiving a first burst mode signal;
determining a configuration setting for at least a second, different, TIA based at least in part on the first parameter; and
configuring at least the second TIA, for receiving a second burst mode signal, based at least in part on the configuration setting.
